Europäisches Patentamt

European Patent Office

Office européen des brevets

(19)

(11) Veröffentlichungsnummer : **0 324 800 B1**

(12) **EUROPÄISCHE PATENTSCHRIFT**

(45) Veröffentlichungstag der Patentschrift :
10.07.91 Patentblatt 91/28

(51) Int. Cl.⁵ : **B29B 7/56**

(21) Anmeldenummer : **88901543.4**

(22) Anmeldetag : **08.02.88**

(86) Internationale Anmeldenummer :
**PCT/DE88/00059**

(87) Internationale Veröffentlichungsnummer :
**WO 88/06085 25.08.88 Gazette 88/19**

(54) **MISCH- UND SCHERWALZWERK FÜR PLASTIFIZIERBARES MATERIAL.**

(30) Priorität : **11.02.87 DE 3704108**

(43) Veröffentlichungstag der Anmeldung :
**26.07.89 Patentblatt 89/30**

(45) Bekanntmachung des Hinweises auf die
Patenterteilung :
**10.07.91 Patentblatt 91/28**

(84) Benannte Vertragsstaaten :
**AT BE CH DE FR GB IT LI LU NL SE**

(56) Entgegenhaltungen :
**DE-A- 3 500 687**

(56) Entgegenhaltungen :
**DE-A- 3 530 141**
**FR-A- 1 127 405**
**FR-A- 1 133 719**
**US-A- 1 936 490**

(73) Patentinhaber : **Albers, August, Dr.-Ing.**
**Grissheimer Weg 7**
**W-7843 Heitersheim (DE)**

(72) Erfinder : **Albers, August, Dr.-Ing.**
**Grissheimer Weg 7**
**W-7843 Heitersheim (DE)**

(74) Vertreter : **Thoma, Friedrich, Dipl.-Ing.(FH) et al**
**Buchenstrasse 20**
**W-7612 Haslach i.K. (DE)**

EP 0 324 800 B1

## Beschreibung

Die Erfindung betrifft ein Misch- und Scherwalzwerk für plastifizierbares Material mit den Merkmalen nach dem Oberbegriff das Patentanspruchs 1.

. Bei derartigen Walzwerken zum kontinuierlichen Mischen, Homogenisieren, Plastifizieren und Transportieren von Kunststoffen, Gummi, und anderen plastifizierbaren Materialien ist es erforderlich, daß die Materialien, unabhängig vom Zustand ihrer Viskosität zum Zeitpunkt der Aufgabe auf das Walzwerk, vom Walzwerk intensiv und zuverlässig bearbeitet werden. Dabei soll sichergestellt sein, daß die Scher- und/ oder Knetdrücke im Plastifizierungsspalt, insbesondere zwischen den beiden Walzen, hinreichend klein gehalten werden können, um eine große Walzenlänge in Abhängigkeit von einem bestimmten Walzendurchmesser zu erzielen.

Aus der DE-OS 16 79 880 ist ein Misch- und Scherwalzwerk bekannt geworden, bei dem zumindest über einen wesentlichen Teil der am Aufgabeende beginnennden Arbeitslänge die Stege der einen Walze in die Nuten der anderen Walze eingreifen und die Walzen außerdem eine Art Schraubengewinde mit dreieckförmigem Querschnitt der Stege aufweisen, sodaß diese zwischen den dann auch dreieckformigen Nuten praktisch nur aus scharfen Kanten bestehen.

Dieses Walzwerk ist mit dem Nachteil behaftet, daß durch die Anordnung und Form der Profilierung der Walzen die für die Plastifizierung erforderlichen, eine Knetung hervorrufenden Scherkräfte bezüglich Einwirkungsdauer und -richtung sehr gleichförmig sein müssen, weil die Walzenoberflächen wegen dem Ineinandergreifen der Stege der einen Walze in die Nuten der anderen Walze nur in einem festen Drehzahlverhältnis zueinander laufen können. Deshalb kann eine intensive Durcharbeitung sowie gute Durchmischung und Homogenisierung-des plastischen Materials nicht erreicht werden.

Bei einem anderen, aus der DE-AS 21 10 179, bekanntgewordenen Walzwerk ist der Achsabstand der beiden Walzen größer als die Summe ihrer Radien, sodaß zwischen den Walzen ein Plastifizierungsspalt gebildet ist. Beide Walzen sind auf ihrem Umfang mit schraubengangförmig verlaufenden Nuten profiliert, die durch Zwischenstege eingegrenzt sind. Die Nuten und die Zwischenstege weisen dort einen rechteckigen Querschnitt auf. .

Obwohl dieses Walzwerk im Plastifizierungsspalt eine relativ gute Knetung und Durchmischung bestimmter zu bearbeitender Materialien ermöglicht, ist der Einsatz dieser Vorrichtung auf relativ hochviskose Massen begrenzt. Niederviskoses Material oder harte Materialpartikel werden nicht oder nur teilweise in den Plastifizierungsspalt eingezogen, sodaß für solche Massen keine ausreichende Bearbeitung gewährleistet ist.

Aus der EP-A-0 148 966 ist ein Misch- und Scherwalzwerk bekannt, bei dem die beiden Walzen von Innen und von Außen temperiert sind. Die, auf dem Umfang der Walzen angeordneten scharfkantigen Nuten können eine Nutsteigung zwischen 5° und 45° aufweisen.

Auch dieses Walzwerk kann nur für Materialien mit einer bestimmten spröden Härte optimal eingesetzt werden, weil diese genügend Spaltdruck erzeugen und dadurch der Materialtransport durch die Nuten eng begrenzt ist. Für weichplastisches Material ist dieses Walzwerk ungeeignet.

Außerdem ist durch die DE-PS 23 56 201 eine Vorrichtung zum Plastifizieren von Gummi, Kunststoff und ähnlichen plastischen Massen bekannt. Bei diesem Walzwerk, bei dem die Nutenbreite auf denbeiden Walzen das 3,5-bis 2,5 fache ihrer Tiefe und die Breite der Zwischenstege das 1,5-bis 2,5 fache der Nutenweite beträgt, und dessen Walzen mit unterschiedlicher Geschwindigkeit laufen können, kann die Steigung der Nuten und der Zwischenstege zwischen 15° bis 75°, vorzugsweise 45° betragen. Weiterhin können dort die beiden Walzen Vielfachprofile ungleicher Steigung je Walze besitzen und/oder ungleiche Nutentiefen oder -breiten haben.

Auch dieses Walzwerk stellt noch keine optimale Lösung zur Verarbeitung zueinander in der Viskosität stark unterschiedlicher Materialien dar zumal der Materialtransport im Plastifizierungsspalt für die verschiedenen Materialtypen noch nicht sichergestellt ist und die Spaltdrücke bei einer vorzugsweisen Steigung von 45° noch zu groß sind.

Das Verhältnis des Durchmessers der beiden Walzen zur Länge der Walzen kann bei einem derartigen Walzwerk aufgrund der dortigen Nutensteigung höchstens 1 zu 5 betragen.

Der Erfindung liegt die Aufgabe zugrunde, ein Walzwerk der eingangsgenannten Art so zu verbessern, daß im Walzprozeß eine intensive aber schonende Scherung von Ausgangsmaterialien unterschiedlichster Art und-/oder in den verschiedensten niedrigviskosen bis hin zu hartspröden Zustandsformen ermöglicht und trotzdem ein sicherer Einzug in den Plastifizierungsspalt gewährleistet ist. Außerdem soll das Material im Walzprozeß zwischen den Walzenoberflächen kurzzeitig intensiv geschert, in den Nuten entspannt und großvolumig umgeschichtet werden.

Diese Aufgabe wird mit den Merkmalen im kennzeichnenden Teil des Patentanspruchs 1 gelöst und in den Unteransprüchen sind weitere Merkmale beansprucht.

Die, auf den Walzen vorgesehenen Nuten mit einer Nutensteigung von größer als 75° bewirken einen sicheren Transport des zu bearbeitenden Materials von der Materialaufgabeseite entlang dem Plastifizierungsspalt hin zur Materialabnahmeseite. Außerdem stellt diese Anordnung der Nuten auf den Walzen sicher, daß nicht nur eine zuverlässige Scherung von harten Materialteilchen gewährleistet ist, sondern daß durch diese Anordnung auch die Spaltdrücke und damit die Lagerbelastung der Walzen erheblich reduziert werden. Diese reduzierte Lagerbelastung entsteht insbesondere dadurch, daß die harten Materialteilchen nicht wie bei den bekannten Walzwerken im relativ engen Plastifizierungsspalt gewaltsam zsammengequetscht werden, sondern diese Materialteilchen können zunächst in die Freiräume zweier benachbarter, gegenüberliegender Nuten ausweichen und werden dort aufgrund der Nutensteigung und der mit unterschiedlichen Umfangsgeschwindigkeiten angetrieben beiden Walzen von den scharfen Kanten der Nuten in Transportrichtung des Materials in einem scherenartigen Schnitt in axialer Richtung zerteilt.

Ein weiterer Fortschritt dieser relativ großen Nutensteigung und der damit reduzierten Spaltdrücke liegt nun in der Möglichkeit, die Länge der Walzen bis zum zwanzigfachen des Durchmessers der Walzen zu steigern. Damit kann im relativ langen Plastifizierungsspalt eine noch intensivere Durchmischung bei größtmöglicher Materialschonung durch die geringen Spaltdrücke erzielt werden.

Eine zusätzliche Steigerung in der Bearbeitung plastifizierbaren Materials wird durch eine vorteilhafte Weiterbildung gemäß den Merkmalen im kennzeichnenden Teil des Patentanspruchs 2 und der sich daran anschließenden Unteransprüche dadurch erzielt, daß auf den Walzen Nuten mit zueinander unterschiedlicher Nutensteigung bezogen auf die Walzenachsen, einander überschneidend angeordnet sind. Zweckmäßigerweise sind dabei die Zwischenstege zwischen den Nuten mindestens zweimal so breit, wie die Nuten selbst breit sind. In dieser Anordnung sind dabei Nuten mit einer Nutensteigung von größer als 75°, mit Nuten mit einer Nutensteigung zwischen 5° und 45° einander überschneidend auf mindestens einer Walze vorgesehen. Die damit erzielbaren Vorteile liegen dabei sowohl in dem sicheren Materialeinzug von relativ grobstückigen und/ oder harten Materialien insbesondere durch die Nuten mit der kleineren Nutensteigung, als auch in dem zuverlässigen Transport des Materials durch die Nuten mit der großen Nutensteigung.

Außerdem wird dort neben einer sicheren Scherung von harten Materialpartikeln, eine optimale Durchmischung, Homogenisierung und Plastifizierung von auf das Walzwerk aufgegebenen Materialien unterschiedlichster Viskosität erzielt.

Vorteilhaft ist ferner, daß auch bei dieser weitergebildeten Anordnung der Nuten relativ niedere Spaltdrücke erzielbar sind, sodaß auch hier Walzwerke mit einem Verhältnis der Walzendurchmesser zur Länge der Walzen von 1 zu 20 gebaut werden können.

Ausführungsbeispiele mit diesen und weiteren vorteilhaften Merkmalen sind in den Zeichnungen dargestellt und werden im folgenden näher erläutert. Es zeigen

Fig. 1     eine Draufsicht auf ein Walzenpaar mit beidseitig axial zueinander versetzten Walzenlagern und mit zueinander gegenläufigen Nuten großer Nutensteigung auf beiden Walzen,

Fig. 2     die Ansicht eines Walzenpaarausschnitts im Bereich des Plastifizierungsspaltes der Anordnung nach Fig. 1,

Fig. 3     eine Draufsicht auf ein Walzenpaar mit zueinander gegenläufig angeordneten Nuten, die auf jeder der Walzen mit zwei zueinander unterschiedlichen Nutensteigungen, einander überschneidend, vorgesehen sind,

Fig. 4     die Ansicht eines Walzenpaarausschnitts im Bereich des Plastifizierungsspaltes der Anordnung nach Fig. 3,

Fig. 5     eine Teilschnittansicht auf eine Walzenanordnung in einem Gehäuse,

Fig. 6     eine Querschnittsansicht durch eine Anordnung nach Fig. 5,

Fig. 7     eine Längsschnittansicht durch ein einseitig gelagertes, in einem Gehäuse angeordneten Walzenpaar,

Fig. 8     eine Querschnittsansicht durch die Anordnung nach Fig. 7,

Fig. 9     eine Querschnittsansicht durch ein, von einem Gehäuse engummanteltes Walzenpaar und

Fig. 10    eine Längsschnittansicht im Bereich des Plastifizierungsspaltes der Anordnung nach Fig. 9.

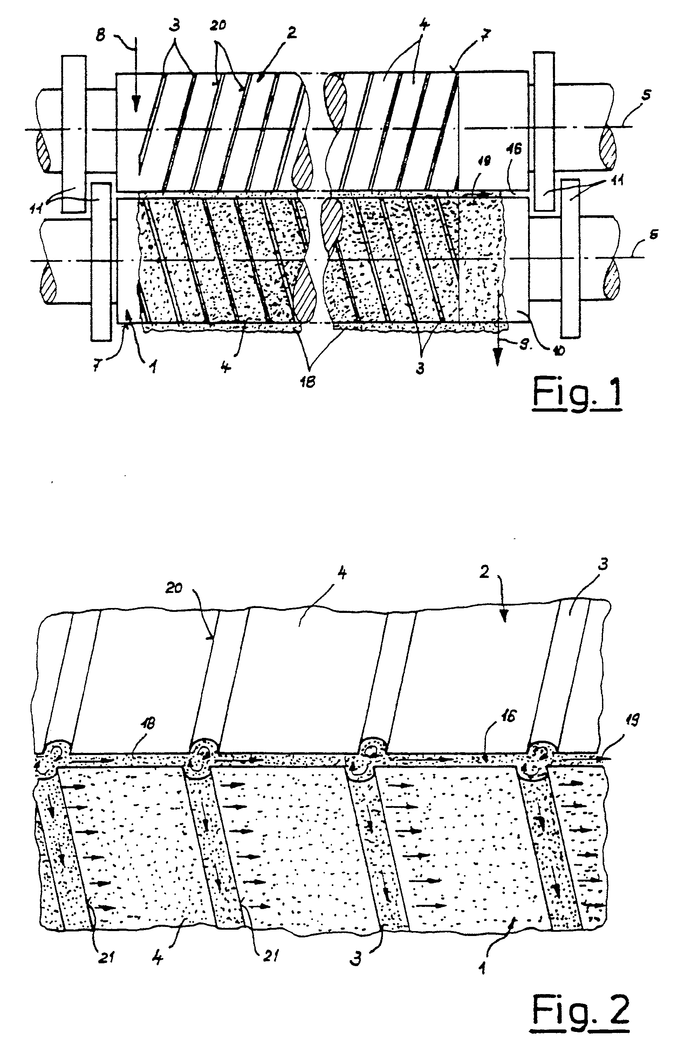

Das, in der Fig. 1, nur im wesentlichen dargestellte Walzwerk besteht im wesentlichen aus den achsparallel zueinander angeordneten Walzen 1 und 2. Der Abstand der beiden Walzenachsen 5 ist dort grösser als die Summe der Radien der Walzen 1 und 2, die zwischen sich über ihre gesamte Länge einen Plastifizierungsspalt 16 bilden. Beide Walzen 1 und 2 sind auf den Mantelflächen 7 mit Nuten 3 profiliert. Die Nutensteigung der Nuten 3 ist dort größer als 75°, insbesondere größer als 80°, bezogen auf die Walzenachsen 5. Die, zwischen den Nuten 3 verbleibenden, Zwischenstege 4 sind mindestens zweimal so breit, wie die Nuten 3 breit sind. Die Nuten 3 sind im Übergangsbereich zur Mantelfläche 7 scharfkantig ausgebildet.

Die Walzen 1 und 2 sind einzeln und insbesondere zueinander gegenläufig angetrieben. Die Drehzahl jeder Walze 1 und 2 ist frei einstellbar, Beide Walzen 1 und 2 können von innen und/oder von außen, insbesondere mit mindestens zwei Temperaturzonen über die Walzenlänge, temperiert sein.

Die relativ große Nutensteigung auf den Walzen 1 und 2 von größer als 75° gewährleistet einen sicheren Transport des Materials 18 in Transportrichtung 19. Außerdem wird durch diese relativ große Nutensteigung eine intensive Scherung des Materials 18 im Plastifizierungsspalt 16 erzielt. In der schaubildlichen Ansicht der Fig. 2 ist ein Teilbereich des Bearbeitungsablaufs dargestellt. Das Material 18 befindet sich dabei nur auf der sogenannten vorderen Walze 1. Die sogenannte hintere Walze 2 bleibt materialfrei.

Wird die Walze 2 schneller gedreht als die Walze 1, dann wirken die zur Transportrichtung 19 des Materials 18 hinteren Kanten 20 der Nuten 3 der Walze 2 als Schubkanten und die vorderen Kanten 21 der Walze 1 als Rückhaltekanten auf das im Plastifizierungsspalt 16 gescherte, zerteilte und umgewälzte Material 18. Der Druck im Plastifizierungsspalt 16 bleibt bei der vorgesehenen Nutensteigung relativ gering, weil die härteren Anteile des Materials 18 jeweils vom Plastifizierungsspalt 16 in den Freiraum zweier gegenüberliegend benachbarter Nuten 3 ausweichen und dort in Transportrichtung 19 zerteilt werden, das bereits plastifizierte Material 18 von den Nuten 3 jedoch in derselben Richtung 19 weitergeschleppt wird.

Eine Differenz in der Umfangsgeschwindigkeit der Walzen 1 und 2 bewirkt im Bearbeitungsprozeß auch eine relative Änderung in den Nutensteigungen der Nuten 3 auf den Walzen 1 und 2. Diese Relativbewegungen erzeugen im wesentlichen die in Transportrichtung 19 wirkenden zusätzlichen Scherkräfte.

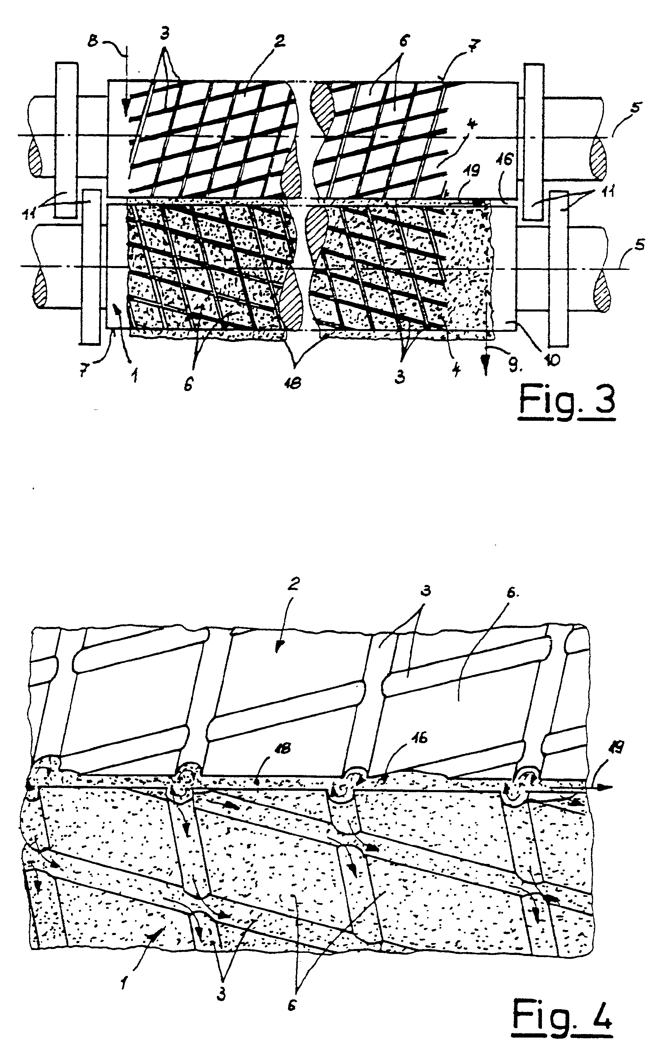

Zur Verbesserung der Materialaufnahmemenge, die bei einer Ausführung gemäß der Fig. 1 und 2 durch die dort relativ steilgängigen Nuten 3 begrenzt ist, zumal dort nur relativ kleine Anteile von feinstückigen, härteren Materialien 18 aufgenommen und bearbeitet werden können, werden gemäß der Fig. 3 und den folgenden Figuren, insbesondere eine Anordnung der Nuten 3 beschrieben, die die zuvor erwähnte Beschränkung der Materialaufnahmemenge in vorteilhafter Weise behebt.

Im einzelnen wird dies dadurch erzielt, daß auf den Walzen 1 und 2 Nuten 3 mit mindestens zwei zueinander unterschiedlichen Nutensteigungen bezogen auf die Walzenachsen 5 einander überschneidend angeordnet sind. Dabei müssen die Zwischenstege 4 zwischen den Nuten 3 mindestens zweimal so breit bemessen sein, wie die Nuten 3 mit gleicher Nutensteigung breit sind. Die Ziffer 16 bezeichnet den Plastifizierungsspalt mit dem dort befindlichen Material 18 und die Ziffer 19 zeigt die Transportrichtung in der das Material 18 bewegt wird. Die Nutensteigung der einen, zu den Walzenachsen 5 relativ flach verlaufenden, Nuten 3 kann zwischen einem Winkel von 5° und 45°, insbesondere zwischen einem Winkel von 5° und 30°, liegen, denn es hat sich gezeigt, daß bei Nutensteigungen von 30° bis 45° relativ harte Materialien 18 nicht mehr aufgenommen und zerschnitten und relativ weichplastische Materialien 18 nur noch schwer in den Plastifizierungsspalt 16 eingezogen werden.

Die Nutensteigungen der anderen, zu den Walzenachsen 5 relativ steil verlaufenden, Nuten 3 können zwischen einem Winkel von 75° bis 89°, insbesondere größer als 80°, bezogen auf die Walzenachsen 5 liegen. Diese Nuten 3 bewirken nicht nur einen sicheren Materialtransport von der Materialaufgabeseite 8 hin zur Materialabnahmeseite 9, sondern auch eine, bereits in den Ausführungen zu den Fig. 1 und 2 erwähnte, zuverlässige zusätzliche Scherung von relativ kleinen und harten, als auch weichplastischen Materialteilchen.

Wird dabei die materialfreie Walze 2 schneller gedreht, als die materialbedeckte Walze 1, dann wird das Material 18 schneller in Transportrichtung 19 im Plastifizierungsspalt 16 und auf der Walze 1 verschoben. Dreht die Walze 2 langsamer als die Walze 1, dann wird das Material 18 insbesondere in den Nuten 3 der Walze 1 relativ langsamer transportiert, beziehungsweise gebremst. Durch die Wechselwirkungen zwischen den Nuten 3 mit flacher Nutensteigung und den Nuten 3 mit steiler Nutensteigung wird eine relativ großvolumige Materialumlagerung und vielfache Materialzerteilung gewährleistet. In jedem Falle wird auch relativ weichplastisches Material 18 sicher zur Materialabnahmeseite 9 hin transportiert, weil zum Materialvorschub kein großer Druckaufbau in den relativ steilgängigen Nuten 3 erforderlich ist.

Die Anordnung von Nuten 3 mit mindestens zwei zueinander unterschiedlichen und einander überschneidenden Nutensteigungen bewirkt eine ausserordentliche Steigerung der Arbeitsintensität der Mantelflächen 7 der Walzen 1 und 2 und eine relativ große Einsatzbreite dieses Walzwerkes für Materialien 18 in relativ hartem Ausgangszustand bis hin zu relativ weichplastischen Materialien 18. So können dort auch Materialien 18 bearbeitet werden, die durch Austrocknung, Polymerisation oder Temperaturänderung während der Bearbeitung zähplastischer werden.

Wie die Fig. 4 anschaulich zeigt, können Materialpartikel aus den relativ flach verlaufenden Nuten 3 in die relativ steil verlaufenden Nuten 3 wechseln, sodaß dort eine vielfache Unterbrechung und Umlenkung des Materialflusses sichergestellt wird. Durch die auch hier erzielbaren relativ niederen Spaltdrücke kann das Verhältnis der Walzendurchmesser zur Walzenlänge bis 1 zu 20 betragen. Ein weiterer Vorteil dieser Anordnung ist der relativ gute Zusammenhalt des Materials 18 auf der Walze 1, der insbesondere durch die netzförmige Profilierung der Walzenoberfläche mit den dort sich überschneidenden Nutensteigungen erzielt wird. Dabei kann die Nuttiefe der relativ steil verlaufenden Nuten 3 nur etwa 50% bis 75% so tief sein, wie die Nuttiefe der relativ flach verlaufenden Nuten 3 auf der Walze 1. Durch diese besondere Ausgestaltung der Walze 1 verbleibt in den relativ flach verlaufenden Nuten 3 unter der Materialschicht ein entlüftend wirkender Hohlraum in Transportrichtung 19 erhalten.

Die Gestaltung der Nuten 3 auf der Walze 2 kann im Vergleich zu der Ausführung der Nuten 3 auf der Walze 1 unterschiedlich sein. So können dort die relativ flach verlaufenden Nuten 3 nur etwa 50% bis 75% so tief sein, wie die relativ steilgängig verlaufenden Nuten 3 tief sind.

Die Breite der Zwischenstege 4 sowohl zwischen den flach verlaufenden Nuten 3 als auch den steil verlaufenden Nuten 3 beträgt je nach Durchmesser der Walzen 1 und 2, für jede Walze zwischen 10 und 75 mm. Diese Werte beziehen sich auf Walzendurchmesser von ca. 100 bis 500 mm. Die Mantelfläche 7 der Zwischenstege 4 als auch der, durch die Überschneidungen der zueinander verschiedenen Nutensteigungen, gebildeten rautenförmigen Zwischensegmente 6, können mit einer Flächenstruktur versehen sein.

Außerdem ist es vorgesehen, daß sowohl die flach verlaufenden Nuten 3, als auch die steil verlaufenden Nuten 3 zur Materialabnahmeseite 9 hin relativ flach, bis auf etwa die halbe sonst vorgesehene Tiefe auslaufen können. Auf der Seite der Materialabnahme 9 kann ein nutfreier Mantelabschnitt 10 bei allen hier beschriebenen Walzwerkausführungen vorgesehen sein. In diesem Rahmen ist es auch vorgesehen, daß die Lager 11 der Walzen 1 und 2 axial zueinander versetzt angeordnet sein können.

Auch ist daran gedacht, daß bei derartigen Walzwerkausführungen die Abmessungen und Anordnungen der einzelnen Nuten 3 den jeweiligen Eigenschaften des Materials 18 und seiner spezifischen Bearbeitung angepaßt werden können. Dabei kann besonders der Querschnitt der Nuten 3 abgestuft sein. Außerdem kann die Umfangsgeschwindigkeit der Walzen 1 und 2 nicht nur wie bereits aus dem Stande der Technik bekannt zueinander unterschiedlich und regulierbar sein, sondern die Drehzahl der Walzen 1 nd 2 kann intermittierend während des Bearbeitungsprozesses veränderlich sein.

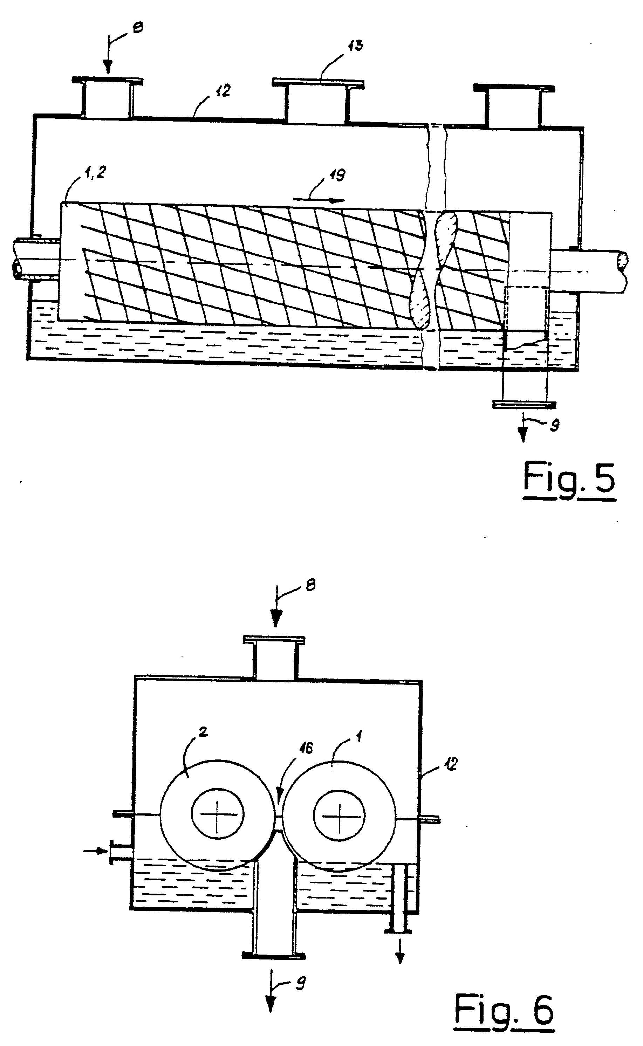

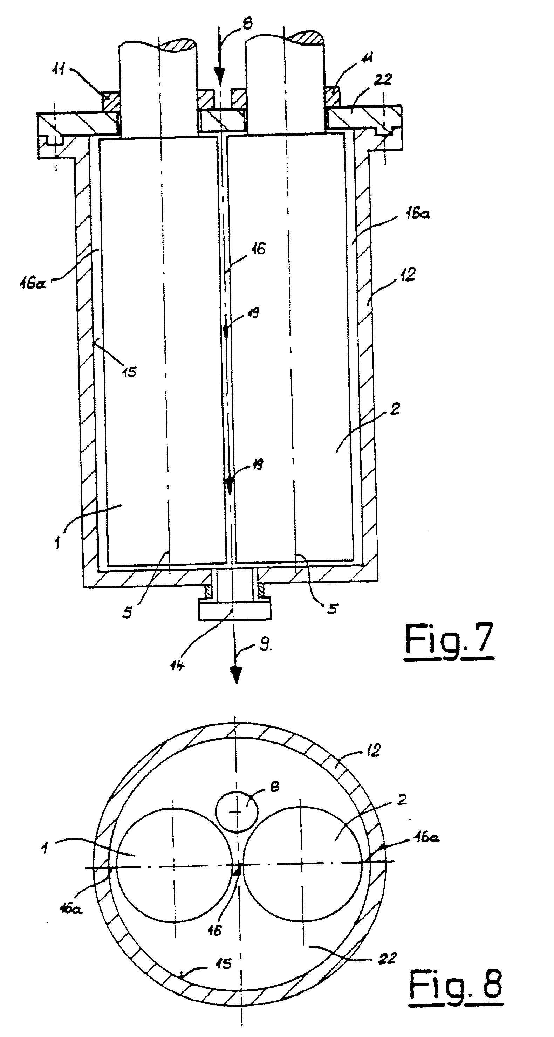

Die beschriebenen Ausführungen der Walzen 1 und 2 können, wie die Figuren 5 bis 10 zeigen, in einem, insbesondere dicht verschließbaren mit Beobachtungsfenster 13 und/oder mit Materialaufgabevorrichtungen 8 und Materialabnahmevorrichtungen 9 versehenen, Gehäuse 12 angeordnet sein. Das Gehäuse 12 kann einen kreiszylindrischen Querschnitt besitzen und drehbar, reversierbar, mit einem eigenen, insbesondere regelbaren, Antrieb versehen sein. Die Rotationsachse 14 des Gehäuses 12 kann dabei parallelverlaufend und symmetrisch zu den Walzenachsen 5 angeordnet sein. Die Innenmantelfläche 15 des Gehäuses 12 kann bis auf einen Plastifizierungsspalt 16a zu jeder Walze 1 und 2 benachbart sein. Die Länge und die Stärke des Plastifizierungsspaltes 16a entspricht im wesentlichen den Abmessungen des Plastifizierungsspaltes 16 der zwischen den Walzen 1 und 2 vorgesehen ist, wie die Fig. 7 und 8 näher zeigen. Aus diesen Figuren ist auch ersichtlich, daß dort die Walzen 1 und 2 außerhalb des Gehäuses einseitig gelagert sind. 8 bezeichnet die Materialaufgabevorrichtung und 9 bezeichnet die konzentrisch angeordnete Materialabnahmevorrichtung, welche in der vorliegenden Anordnung als Düse ausgebildet sein kann.

Insbesondere eine Walzwerkausführung nach den Fig. 7 und 8 ermöglicht eine vorteilhafte Bearbeitung besonders niedrigviskosem Material 18, zumal neben dem relativ engen Plastifizierungsspalt 16 zwischen den Walzen 1 und 2 zwei weitere Spälte 16a zwischen den Walzen 1 und 2 einerseits und der, den Walzen 1 und 2 eng benachbarten Innenmantelfläche 15, andererseits wirksam angeordnet sind.

Außerdem ermöglicht diese Ausführung einen kontinuierlichen Mischbetrieb mit innentemperierten Walzen 1, 2 und/oder unter Vakuum- oder in Lösungsmittelatmosphäre im Innern des Gehäuses 12, auch wenn eine Befüllung und/oder Entleerung über nicht näher gezeigte Schleusen chargenweise erfolgt. Die Lager 11 der Walzen 1 und 2 können unmittelbar am Deckel 22 des Gehäuses 12, erforderlichenfalls axial versetzt, angeordnet sein.

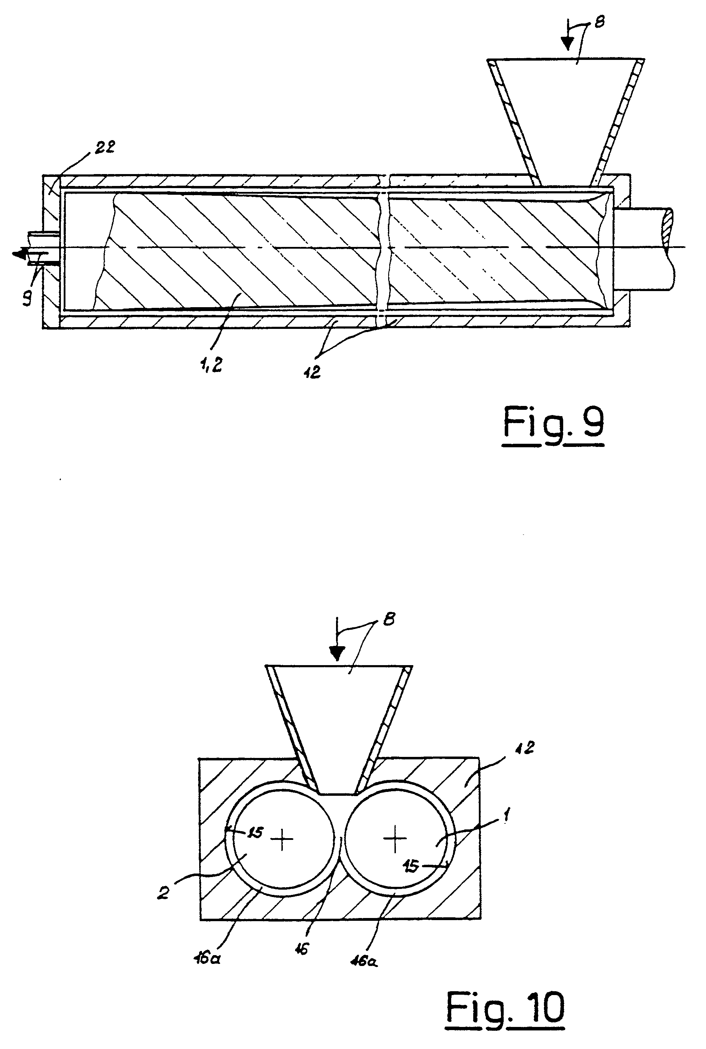

Das Walzwerk nach Fig. 9 und 10 besteht im wesentlichen aus den Walzen 1 und 2, die bis auf den Plastifizierungsspalt 16 zueinander benachbart im Gehäuse 12 angeordnet sind. Die Walzen 1 und 2 können auch in dieser Ausführung insbesondere einseitig außerhalb des Gehäuses 12 gelagert sein. Das Gehäuse 12 ummantelt die beiden Walzen 1 und 2 bis auf einen Bereich beidseitig des Plastifizierungsspaltes 16 relativ eng, wobei der Abstand der Innenmantelflächen 15 zu den Mantelflächen 7 der Walzen 1, 2 der Größe des Plastifizierungsspaltes entsprechen kann. 8 bezeichnet eine Materialaufgabevorrichtung und 9 eine insbesondere düsenförmige Materialabnahmevorrichtung am Gehäuse 12. Diese Walzwerkausführung ist relativ robust und benötigt für schwierige Homogenisierungsaufgaben keine besonderen Knetelemente. Das Material 18 wird dort in relativ dünner Schicht im Plustifizierungsspalt 16 bearbeitet. Dieses Walzwerk ist selbstreinigend. Die Walzen 1, 2 sind mit den zuvor beschriebenen Nuten 3 profiliert, Dabei ist es vorgesehen, daß die Nuten 3 im Bereich der Materialaufgabevorrichtung 8 relativ tief geschnitten sind und in Richtung Materialabnahmevorrichtung 9 flach auslaufend oder weniger tief geschnitten sind, um die Bearbeitungsintensität und den Druckaufbau auf die düsenförmige Materialabnahmevorrichtung 9 zu steigern.

## Ansprüche

1. Misch- und Scherwalzwerk für plastifizierbares Material mit zwei, mit gleicher oder unterschiedlicher, einzeln frei einstellbarer, Umfangsgeschwindigkeit zueinander gegenläufig laufenden, temperierten Walzen (1 und 2), die zwischen sich über ihre gesamte Länge einen Plastifizierungsspalt (16) bilden und auf deren Mantelflächen (7) schräg zu den Walzenachsen (5) verlaufende scharfkantige Nuten (3) und Zwischenstege (4) gleich- oder gegenläufig zueinander angeordnet sind, und mit Materialaufgabe- (8) und -abnahmevorrichtungen (9), die für die verschiedenen Materialien (18) und Zugabestoffe geeignet sind, **dadurch gekennzeichnet,** daß auf beiden Walzen (1 und 2) Nuten (3) mit einer Nutensteigung bezogen auf die Walzenachsen (5) von größer als 75° angeordnet sind, daß die Zwischenstege (4) zwischen den Nuten (3) mindestens zweimal so breit sind, wie die Nuten (3) breit sind, und daß das Verhältnis des Durchmessers der Walzen (1, 2) zur Länge der Walzen (1, 2) größer als 1 zu 10 und kleiner als 1 zu 20 ist.

2. Misch- und Scherwalzwerk nach Anspruch 1, dadurch gekennzeichnet, daß auf mindestens einer der Walzen (1, 2) Nuten (3) mit mindestens zwei zueinander unterschiedlichen Nutensteigungen bezogen auf die Walzenachsen (5) einander überschneidend angeordnet sind, und daß zwischen den Nuten (3) gleicher Nutensteigung Zwischenstege (4) vorgesehen sind, die mindestens zweimal so breit sind, wie die Nuten (3) gleicher Nutensteigung breit sind.

3. Misch- und Scherwalzwerk nach Anspruch 2, dadurch gekennzeichnet, daß die Nuten (3) mit der einen Nutensteigung gegenläufig zu den Nuten (3) mit der anderen Nutensteigung angeordnet sind.

4. Misch- und Scherwalzwerk nach Anspruch 2, dadurch gekennzeichnet, daß die Nuten (3) mit der einen Nutensteigung gleichläufig zu den Nuten (3) mit der anderen Nutensteigung angeordnet sind.

5. Misch- und Scherwalzwerk nach einem der Ansprüche 1 bis 4, dadurch gekennzeichnet, daß die Zwischenstege (4) und/oder die, durch die sich überschneidenden Nuten (3) gebildeten, rautenförmigen Zwischensegmente (6) mit einer Flächenstruktur auf der Mantelfläche (7) versehen sind.

6. Misch- und Scherwalzwerk nach Anspruch 1 bis 5, dadurch gekennzeichnet, daß die Tiefe und/oder die Breite der Nuten (3) von der Nutensteigung abhängig ist.

7. Misch- und Scherwalzwerk nach Anspruch 1 bis 5, dadurch gekennzeichnet, daß die Tiefe der Nuten (3) von der Seite der Materialaufgabevorrichtung (8) zur Seite der Materialabnahmevorrichtung (9) hin mit einem dort vorgesehenen nutfreien Mantelflächenabschnitt (10), insbesondere bei gleichbleibender Breite der Nuten (3), kontinuierlich auf einen Bruchteil oder bis auf das Maß des Durchmessers des Mantelflächenabschnitts (10) verringert ist.

8. Misch- und Scherwalzwerk nach Anspruch 1 bis 5, dadurch gekennzeichnet,daß die Nuten (3) im Bereich der Materialaufgabevorrichtung (8) relativ tief geschnitten sind und in Richtung zur Materialabnahmevorrichtung (9) hin weniger tief geschnitten oder flach auslaufend sind.

9. Misch- und Scherwalzwerk nach Anspruch 1 bis 9, dadurch gekennzeichnet, daß die Lager (11) der Walzen (1, 2) axial zueinander versetzt angeordnet sind.

10. Misch- und Scherwalzwerk nach Anspruch 1 bis 9, dadurch gekennzeichnet, daß die Walzen (1, 2) einseitig zueinander gelagert sind.

11. Misch- und Scherwalzwerk nach Anspruch 1 bis 10, dadurch gekennzeichnet, daß die Materialabnahmevorrichtung (9) als Düse ausgebildet ist.

## Revendications

1. Laminoir de mélange et de cisaillement pour matériau plastifiable comportant deux cylindres, (1 et 2) maintenus à une température équilibrée, tournant dans des directions opposées à des vitesses périphériques identiques ou différentes, réglables séparément, lesquels cylindres (1 et 2) forment sur toute leur longueur un espacement (16) de plastification et sur leurs faces latérales (7) sont disposées, orientées dans le même sens, ou à contresens, d'une part des gorges (3) à arêtes vives s'étendant obliquement par rapport aux axes (5) des cylindres et d'autre part des traverses (4), et comportant des dispositifs (8) d'introduction du matriau et (9) de prélèvement du matériau, dispositifs appropriés pour les divers matériaux (18) et les additifs, caractérisé par le fait que sur les deux cylindres (1 et 2) sont pratiquées des gorges (3) dont le pas, par rapport aux axes (5) des cylindres, est supérieur à 75 degrés, par le fait que les traverses (4) entre les gorges (3) ont une largeur au moins double à celle des gorges (3) et par le fait que le rapport entre le diamètre des cylindres (1) (2) et la longueur des mêmes cylindres (1) (2) est compris entre 1 : 10 et 1 : 20.

2. Laminoir de mélange et de cisaillement selon la revendication 1 caractérisé par le fait que sur au moins l'un des cylindres (1) (2) sont pratiquées des gorges (3) à au moins deux pas différents l'un de l'autre par rapport aux axes (5) des cylindres et venant se recouper, et par le fait qu'entre lesdites gorges (3) de même pas sont prévues des traverses (4) dont la largeur est au moins égale au double de celle des gorges (3) de même pas.

3. Laminoir de mélange et de cisaillement selon la revendication 2 caractérisé par le fait que les gorges (3) d'un même pas sont disposées à contresens des gorges (3) de l'autre pas.

4. Laminoir de mélange et de cisaillement selon la revendication 2 caractérisé par le fait que les gorges (3) d'un pas sont disposées dans le même sens que les gorges (3) de l'autre pas.

5. Laminoir de mélange et de cisaillement selon l'une des revendications 1 à 4 caractérisé par le fait que les traverses (4) et/ou les segments intermédiaires (6) en forme de losanges formés par les gorges (3) qui se recoupent sont munis d'une structure superficielle appliquée sur la face latérale (7).

6. Laminoir de mélange et de cisaillement selon les revendications 1 à 5 caractérisé par le fait que la profondeur et/ou la largeur des gorges (3) est fonction du pas hélicoïdal de ces gorges.

7. Cylindre laminoir de mélange et de cisaillement selon les revendications 1 à 5 caractérisé par le fait que la profondeur des gorges (3) entre le côté du dispositif (8) d'introduction du matériau diminue continuellement jusqu'à devenir égale à une fraction d'elle-même ou à la valeur du diamètre de la section (10) de la surface latérale qui est prévue sans gorge, la largeur desdites gorges (3) restant la même.

8. Laminoir de mélange et de cisaillement selon les revendications 1 à 5 caractérisé par le fait que les gorges (3) au voisinage du dispositif (8) d'introduction de la matière sont relativement profondes et deviennent moins profondes ou plates en direction du dispositif (9) de prélèvement du matériau.

9. Laminoir de mélange et de cisaillement selon les revendications 1 à 9 caractérisé par le fait que les paliers (11) des cylindres (1) (2) sont disposés avec un décalage axial réciproque.

10. Laminoir de mélange et de cisaillement selon les revendications 1 à 9 caractérisé par le fait que les cylindres (1) (2) sont supportés d'un seul côté l'un par rapport à l'autre.

11. Laminoir de mélange et de cisaillement selon les revendications 1 à 10 caractérisé par le fait que le dispositif (9) de prélèvement du matériau est réalisé sous la forme d'un gicleur d'injection.

## Claims

1. A mixing and shearing roll mill for plastifiable material comprising two temperature-controlled rolls (1 and 2) which rotate in a mutually opposed fashion at the same or a different, individually freely adjustable peripheral speed, and which, along their entire length, define a plastification gap (16), and on the outer surfaces (7) of which sharp-edged grooves (3) extending obliquely with respect to the roll axes (5) and lands (4) are arranged in identical or opposing directions to one another, and comprising material input devices (8) and material output devices (9) which are suitable for the different materials (18) and additives, characterised in that grooves (3) having a groove depth, relative to the roll axes (5), of more than 75° are provided in the two rolls (1 and 2), that the breadth of the lands (4) between the grooves (3) is at least twice that of the grooves (3), and that the ratio of the diameter of the rolls (1, 2) to the length of the rolls (1, 2) is greater than 1 to 10 and smaller than 1 to 20.

2. A mixing and shearing roll mill as claimed in claim 1, characterised in that at least in one of the rolls (1, 2), grooves (3) having at least two mutually differing groove pitches relative to the roll axes (5) are arranged in intersecting fashion, and that between the grooves (3) which have the same groove pitch lands (4) are provided, the breadth of which is at least twice that of the grooves (3) which have the same groove pitch.

3. A mixing and shearing roll mill as claimed in claim 2, characterised in that the groove (3) with the first groove pitch extend in the same direction as the grooves (3) with the other groove pitch.

4. A mixing and shearing roll mill as claimed in claim 2, characterised in that the grooves (3) with the first groove pitch are arranged in opposing fashion to the grooves (3) with the other groove pitch.

5. A mixing and shearing roll mill as claimed in one of claims 1 to 4, characterised in that the lands (4) and/or the rhomboid intermediate segments (6), formed by the intersecting grooves (3), are provided with a surface structure on the outer surface (7).

6. A mixing and shearing roll mill as claimed in claims 1 to 5, characterised in that the depth and/or breadth of the grooves (3) is dependent upon the groove pitch.

7. A mixing and shearing roll mill as claimed in claims 1 to 5, characterised in that the depth of the grooves (3) decrease ; continuously from the side of the material input device (8) to the side of the material output device (9) where a groove-free outer surface portion (10) is provided, in particular with a uniform breadth of the grooves (3), to a fraction or to the value of the diameter of the outer surface portion (10).

8. A mixing and shearing roll mill as claimed in claims 1 to 5, characterised in that in the region of the material input device (8) the grooves (3) are cut relatively deeply, and in the direction of the material output device (7) they are cut to a smaller depth or run out.

9. A mixing and shearing roll mill as claimed in claims 1 to 9, charactereised in that the bearings (11) of the rolls (1, 2) are arranged so as to be axially offset in relation to one another.

10. A mixing and shearing roll mill as claimed in claims 1 to 9, characterised in that the rolls (1, 2) are mounted on one and the same side.

11. A mixing and shearing roll mill as claimed in claims 1 to 10, characterised in that the material output device (9) comprises a nozzle.

**Fig. 1**

**Fig. 2**

Fig. 3

Fig. 4

Fig. 5

Fig. 6

Fig.7

Fig.8

## Fig. 9

## Fig. 10